# EUROPÄISCHE PATENTSCHRIFT

(11) **EP 3 069 573 B1**
(45) Veröffentlichungstag und Bekanntmachung des Hinweises auf die Patenterteilung: **16.01.2019**
(21) Anmeldenummer: 14796746.7
(22) Anmeldetag: 07.11.2014
(51) Int. Cl.: H05B 37/02, H05B 33/08

(54) **LED-MODUL, LED-KONVERTER UND VERFAHREN ZUM BETREIBEN WENIGSTENS EINER LEUCHTDIODE**
LED MODULE, LED CONVERTER AND METHOD FOR OPERATING AT LEAST ONE LED
MODULE DE DEL, CONVERTISSEUR DE DEL ET PROCÉDÉ PERMETTANT DE FAIRE FONCTIONNER AU MOINS UNE DIODE ELECTROLUMINESCENTE

(30) Priorität: 11.11.2013 DE 102013222889
(43) Veröffentlichungstag der Anmeldung: 21.09.2016
(73) Patentinhaber: Tridonic GmbH & Co. KG, 6851 Dornbirn (AT); Tridonic Jennersdorf GmbH, 8380 Jennersdorf (AT)
(72) Erfinder: BARTH, Alexander, 6861 Alberschwende (AT); HORN, Frank, 8765 Engi (CH); JUEN, Reinhold, 6850 Dornbirn (AT); LOCHMANN, Frank, 88147 Esseratsweiler (DE); MARENT, Günter, 6781 Bartholomäberg (AT); MOOSMANN, Florian, 6850 Dornbirn (AT); PACHLER, Peter, 8042 Graz (AT)
(74) Vertreter: Banzer, Hans-Jörg
(86) Internationale Anmeldenummer: PCT/EP2014/074045
(87) Internationale Veröffentlichungsnummer: WO 2015/067757

(56) Entgegenhaltungen:
- WO-A1-2011/116404
- DE-A1-102008 024 779
- US-A1- 2007 291 488
- US-A1- 2009 009 093
- US-A1- 2013 020 937

## Beschreibung

Die Erfindung betrifft ein LED-Modul, einen LED-Konverter, ein System mit einem LED-Modul und ein Verfahren zum Betreiben wenigstens einer Leuchtdiode.

Nichtkonventionelle Leuchtmittel, wie Leuchtmittel mit einer Leuchtdiode (LED) oder mit mehreren LEDs, gewinnen zunehmend an Bedeutung. LED-Module sind Beispiele für derartige Leuchtmittel. Zum Betreiben eines Leuchtmittels mit wenigstens einer Leuchtdiode wird ein LED-Konverter verwendet. Herkömmlich wird das Leuchtmittel mit dem LED-Konverter durch mehrere Leiter elektrisch leitend verbunden. Die Herstellung der entsprechenden elektrisch leitenden Verbindungen erhöht den Aufwand bei der Montage. Bei nicht fachmännischer Installation besteht das Risiko, dass das Leuchtmittel und das Betriebsgerät nicht korrekt verbunden werden.

Die DE 10 2008 024 779 A1 beschreibt ein drahtlos speisbares Leuchtmodul, welches weiterhin einen drahtlosen Empfang von Steuerdaten unterstützt. Ein zur drahtlosen Übertragung von Energie ausgestaltetes Leuchtmodul ist auch aus der US 2013/0020937 A1 bekannt. Die US 2007/291488 A1 beschreibt ein Dekorationslichtsystem, bei welchem eine LED-basierte tragbare Leuchtvorrichtung drahtlos mit einer Basis gekoppelt wird. Die Komponenten des Lichtsystems verfügen auch über Kommunikationsfunktionen, die für eine Synchronisation mehrerer Leuchtvorrichtungen genutzt werden können.

Es besteht ein Bedarf an Vorrichtungen, Systemen und Verfahren, die die Montage eines Leuchtmittels mit wenigstens einer Leuchtdiode erleichtern. Es besteht ein Bedarf an derartigen Vorrichtungen, Systemen und Verfahren, die ein Risiko einer fehlerhaften Installation gering halten.

Es werden ein LED-Modul gemäß Patentanspruch 1, ein System gemäß Patentanspruch 8 und ein Verfahren gemäß Patentanspruch 14 bereitgestellt. Die abhängigen Patentansprüche definieren weitere Ausführungsbeispiele.

Nach Ausführungsbeispielen wird vorgesehen, dass ein Leuchtmittel eingerichtet ist, um Energie für wenigstens eine Leuchtdiode über eine Drahtlosschnittstelle zu empfangen, und/oder dass ein LED-Konverter eingerichtet ist, um Energie zum Betreiben wenigstens einer Leuchtdiode über eine Drahtlosschnittstelle drahtlos an ein Leuchtmittel zu übertragen.

Durch die Verwendung einer Drahtlosschnittstelle zum Übertragen von Energie zum Betreiben wenigstens einer Leuchtdiode ist es nicht mehr erforderlich, elektrisch leitende Verbindungen zwischen dem LED-Konverter und dem Leuchtmittel herzustellen, um einen LED-Strom bereitzustellen. Der Arbeitsaufwand bei der Installation und das Risiko einer fehlerhaften Installation werden verringert.

Die Drahtlosschnittstelle kann so ausgestaltet sein, dass das Leuchtmittel eine Spule umfasst, die für eine induktive Kopplung mit einer Spule eines LED-Konverters eingerichtet ist. Die Spule des Leuchtmittels kann die Sekundärspule eines Transformators sein, mit der Energie zu dem Leuchtmittel übertragen wird. Die Spule des LED-Konverters kann die Primärspule des Transformators sein, mit der Energie zu dem Leuchtmittel übertragen wird.

Eine galvanische Trennung zwischen dem Leuchtmittel und dem LED-Konverter wird durch das Leuchtmittel und den LED-Konverter dadurch erzielt, dass die Energieübertragung drahtlos erfolgt und keine elektrisch leitende Verbindung zwischen dem Leuchtmittel und dem LED-Konverter hergestellt werden muss, um die wenigstens eine Leuchtdiode mit einem LED-Strom zu versorgen.

Ein LED-Modul nach einem Ausführungsbeispiel umfasst wenigstens eine Leuchtdiode und eine Drahtlosschnittstelle zur drahtlosen Energieübertragung, um die wenigstens eine Leuchtdiode mit Energie zu versorgen.

Die Drahtlosschnittstelle kann ein Element zur induktiven Kopplung des LED-Moduls mit einem LED-Konverter umfassen. Das Element zur induktiven Kopplung kann eine Spule sein. Das Element zur induktiven Kopplung kann eine Sekundärspule eines Transformators sein.

Die Drahtlosschnittstelle kann eine Antenne umfassen.

Das LED-Modul kann eine mit der Drahtlosschnittstelle gekoppelte Versorgungsschaltung umfassen, die eingerichtet ist, um einen LED-Strom für die wenigstens eine Leuchtdiode bereitzustellen. Die Versorgungsschaltung kann wenigstens einen Wandler, beispielsweise einen Abwärtswandler oder Sperrwandler, umfassen.

Die Drahtlosschnittstelle kann sowohl zur drahtlosen Energieübertragung als auch zur Drahtloskommunikation eingerichtet sein. Die Drahtlosschnittstelle kann eingerichtet sein, um von dem LED-Konverter übertragene Daten zu empfangen. Das LED-Modul kann einen Demodulator umfassen, der mit der Drahtlosschnittstelle gekoppelt ist. Der Demodulator kann eingerichtet sein, um eine Frequenz einer Spulenspannung oder eines Spulenstroms einer Spule, über die das LED-Modul Energie von dem LED-Konverter empfängt, auszuwerten, um übertragene Daten zu ermitteln.

Das LED-Modul weist eine von der Drahtlosschnittstelle verschiedene Kommunikationsschnittstelle zur Drahtloskommunikation auf. Die Kommunikationsschnittstelle kann für eine drahtlose unidirektionale oder bidirektionale Kommunikation mit dem LED-Konverter eingerichtet sein, mit dem das LED-Modul im Betrieb gekoppelt ist. Die Kommunikationsschnittstelle ist für eine drahtlose unidirektionale oder bidirektionale Kommunikation mit wenigstens einem weiteren LED-Modul eingerichtet. Die Kommunikationsschnittstelle kann für eine drahtlose unidirektionale oder bidirektionale Kommunikation mit einer zentralen Farb- und/oder Helligkeitssteuerung eingerichtet sein.

Das LED-Modul kann ein mechanisches Kopplungselement zum mechanischen Anbringen des LED-Moduls an einem LED-Konverter umfassen. Das mechanische Kopplungselement kann so eingerichtet sein, dass das LED-Modul reibschlüssig und/oder formschlüssig an dem LED-Konverter befestigbar ist. Das mechanische Kopplungselement kann so eingerichtet sein, dass das LED-Modul ohne ein von dem LED-Modul und dem LED-Konverter separates Befestigungselement an dem LED-Konverter befestigbar ist.

Das LED-Modul kann auf den LED-Konverter aufsteckbar sein. Das LED-Modul kann eingerichtet sein, um an dem LED-Konverter formschlüssig oder reibschlüssig anbringbar zu sein.

Das LED-Modul ist für eine Drahtloskommunikation mit wenigstens einem weiteren LED-Modul eingerichtet.

Das LED-Modul kann so ausgestaltet sein, dass er keine Anschlüsse für eine verdrahtete Verbindung mit dem LED-Konverter aufweist.

Ein mit dem LED-Modul einsetzbarer LED-Konverter umfasst einen Eingang zum Empfangen einer Versorgungsspannung und eine Drahtlosschnittstelle zur drahtlosen Energieübertragung zu dem LED-Modul.

Die Drahtlosschnittstelle des LED-Konverters kann ein Element zur induktiven Kopplung mit dem LED-Modul umfassen. Die Drahtlosschnittstelle des LED-Konverters kann eine Spule umfassen. Die Drahtlosschnittstelle des LED-Konverters kann eine Primärspule eines Transformators sein, die für eine induktive Kopplung mit einer in dem LED-Modul vorgesehenen Sekundärspule des Transformators eingerichtet ist.

Der LED-Konverter kann wenigstens ein mechanisches Kopplungselement zum mechanischen Anbringen eines LED-Moduls an dem LED-Konverter umfassen. Der LED-Konverter kann eingerichtet sein, um ein daran angebrachtes LED-Modul reibschlüssig oder formschlüssig zu halten.

Der LED-Konverter kann so ausgestaltet sein, dass er keine Anschlüsse für eine verdrahtete Verbindung mit dem LED-Modul aufweist.

Ein System nach einem Ausführungsbeispiel umfasst ein LED-Modul nach einem Ausführungsbeispiel und einen LED-Konverter.

Das LED-Modul und der LED-Konverter können so eingerichtet sein, dass das LED-Modul in einem Formschluss oder in einem Kraftschluss, insbesondere in einem Reibschluss, an dem LED-Konverter anbringbar ist.

Das LED-Modul kann auf den LED-Konverter aufsteckbar sein.

Die Drahtlosschnittstelle des LED-Konverters kann eine Primärinduktivität eines Transformators sein. Die Drahtlosschnittstelle des LED-Moduls kann eine Sekundärinduktivität des Transformators sein.

Mit dem Transformator kann Energie zum Betreiben der wenigstens einen Leuchtdiode über eine Potentialbarriere übertragbar sein. Die Potentialbarriere kann eine SELV ("Separated Extra Low Voltage")-Barriere sein. Das LED-Modul kann als ein SELV-Gerät ausgebildet sein.

Der LED-Konverter und das LED-Modul können galvanisch getrennt sein.

Der LED-Konverter und das LED-Modul können für eine unidirektionale oder bidirektionale Kommunikation zwischen dem LED-Konverter und dem LED-Modul eingerichtet sein. Die Kommunikation kann über die Drahtlosschnittstelle, die zum Übertragen von Energie zum Betreiben der wenigstens einen Leuchtdiode verwendet wird, oder über eine separate Kommunikationsschnittstelle erfolgen.

Nach einem weiteren Ausführungsbeispiel wird ein Verfahren zum Betreiben wenigstens einer Leuchtdiode eines LED-Moduls bereitgestellt. Das Verfahren umfasst ein drahtloses Übertragen von Energie von einem LED-Konverter zu dem LED-Modul über eine Drahtlosschnittstelle, um einen LED-Strom für die wenigstens eine Leuchtdiode bereitzustellen.

Weitere Merkmale des Verfahrens nach Ausführungsbeispielen und die damit jeweils erzielten Wirkungen entsprechen den Merkmalen von Vorrichtungen und Systemen nach Ausführungsbeispielen.

Zum drahtlosen Übertragen von Energie kann eine induktive Kopplung zwischen dem LED-Konverter und dem LED-Modul verwendet werden. Die drahtlose Übertragung von Energie kann zwischen einer Spule des LED-Konverters und einer damit induktiv gekoppelten Spule des LED-Moduls erfolgen, die einen Transformator bilden.

Das Verfahren kann ein Übertragen von Information zwischen dem LED-Konverter und dem LED-Modul umfassen. Die Information kann über die Drahtlosschnittstelle zur Energieübertragung übertragen werden. Die Information kann über eine separate Kommunikationsschnittstelle drahtlos zwischen dem LED-Konverter und dem LED-Modul übertragen werden.

Die übertragene Information kann Steuerbefehle umfassen, die von dem LED-Konverter zu dem LED-Modul übertragen werden.

Die übertragene Information kann Sensordaten umfassen, die von dem LED-Modul zu dem LED-Konverter übertragen werden.

Nach Ausführungsbeispielen der Erfindung kann Energie zum Betreiben wenigstens einer Leuchtdiode drahtlos von dem LED-Konverter zu dem LED-Modul übertragen werden. Es ist nicht erforderlich, Leitungen zur Übertragung von Energie an dem LED-Konverter und dem LED-Modul anzubringen, um einen LED-Strom an die wenigstens eine Leuchtdiode bereitzustellen.

Die Erfindung wird nachfolgend unter Bezugnahme auf die beigefügte Zeichnung anhand bevorzugter Ausführungsbeispiele näher erläutert.
Figur 1 zeigt ein System mit einem LED-Konverter und einem LED-Modul nach einem Ausführungsbeispiel.
Figur 2 zeigt ein System mit einem LED-Konverter und einem LED-Modul nach einem weiteren Ausführungsbeispiel.
Figur 3 zeigt ein System mit einem LED-Konverter und einem LED-Modul nach einem weiteren Ausführungsbeispiel.
Figur 4 zeigt ein System mit einem LED-Konverter und einem LED-Modul nach einem weiteren Ausführungsbeispiel.
Figur 5 zeigt ein System mit mehreren LED-Konvertern und LED-Modulen nach einem Ausführungsbeispiel.

Die Erfindung wird nachfolgend anhand von Ausführungsbeispielen unter Bezugnahme auf die Figuren näher beschrieben, in denen identische Bezugszeichen identische oder korrespondierende Elemente repräsentieren. Die Merkmale verschiedener Ausführungsbeispiele können miteinander kombiniert werden, sofern dies in der Beschreibung nicht ausdrücklich ausgeschlossen wird. Auch wenn einige Ausführungsbeispiele im Kontext spezifischer Anwendungen, beispielsweise im Kontext von LED-Modulen, näher beschrieben werden, sind die Ausführungsbeispiele nicht auf diese Anwendungen beschränkt.

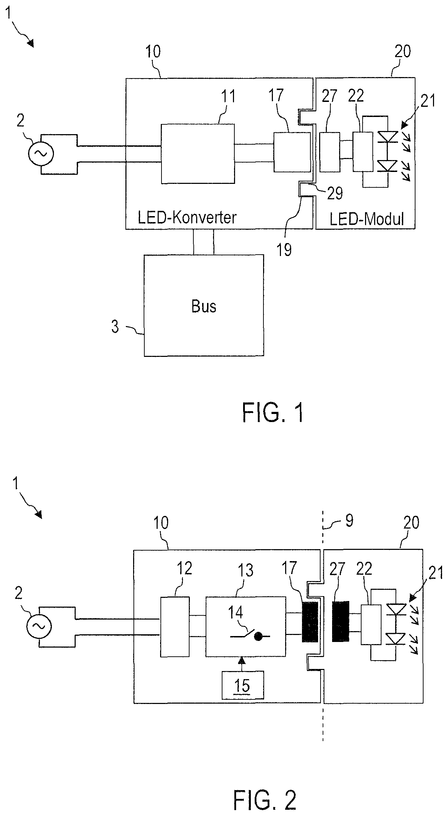

Figur 1 zeigt ein System 1, bei dem ein LED-Konverter 10 nach einem Ausführungsbeispiel ein Leuchtmittel nach einem Ausführungsbeispiel mit Energie versorgt. Das Leuchtmittel kann ein LED-Modul 20 sein. Das Leuchtmittel kann eine Leuchtdiode (LED) oder mehrere LEDs 21 umfassen. Die LEDs 21 können anorganische oder organische LEDs sein. Der LED-Konverter 10 kann optional mit einem Bus 3 oder einem Drahtloskommunikationssystem verbunden sein, um Dimmbefehle oder Befehle einer Farbsteuerung zu empfangen und/oder Statusmeldungen auszugeben.

Der LED-Konverter 10 ist im Betrieb eingangsseitig mit einer Versorgungsspannungsquelle 2, beispielsweise einer Netzspannung, gekoppelt. Der LED-Konverter 10 kann wenigstens eine Wandlerschaltung 11 umfassen. Die Wandlerschaltung 11 kann ein DC/DC-Wandler sein. Der LED-Konverter 10 kann einen Gleichrichter und eine Leistungsfaktorkorrekturschalung umfassen, die zwischen den Eingang und die Wandlerschaltung 11 geschaltet sein können.

Das LED-Modul 20 kann auf den LED-Konverter 10 aufgesteckt sein. Das LED-Modul 20 kann ein Kopplungselement 29 zur mechanischen Kopplung mit dem LED-Konverter 10 umfassen. Der LED-Konverter 10 kann ein weiteres Kopplungselement 19 zur mechanischen Kopplung mit dem LED-Modul 20 umfassen. Das Kopplungselement 19 des LED-Konverters 10 und das Kopplungselement 29 des LED-Moduls 20 können aufeinander abgestimmte Geometrien aufweisen, so dass eines der Kopplungselemente in dem anderen der Kopplungselemente wenigstens teilweise aufgenommen werden kann.

Das Kopplungselement 29 des LED-Moduls 20 und das weitere Kopplungselement 19 des LED-Konverters 10 können für eine reibschlüssige und/oder formschlüssige Verbindung ausgestaltet sein. Das Kopplungselement 29 des LED-Moduls 20 und das weitere Kopplungselement 19 des LED-Konverters 10 können aufeinander abgestimmt sein, um eine einzige Orientierung zwischen dem LED-Modul 20 und dem LED-Konverter 10 zu definieren, in der das LED-Modul 20 an dem LED-Konverter 10 anbringbar ist.

Alternativ können zur Verbindung des LED-Moduls 20 mit dem LED-Konverter 10 Permanentmagnete, Klettverschlüsse, Klebverbindungen oder auch andere mechanischen Verbindungen verwendet werden.

Eine Übertragung von Energie von dem LED-Konverter 10 zu dem LED-Modul 20 kann über eine Drahtlosschnittstelle erfolgen. Eine Drahtlosschnittstelle 17 des LED-Konverters 10 und eine Drahtlosschnittstelle 27 des LED-Moduls 20 können miteinander gekoppelt sein, wenn das LED-Modul 20 an dem LED-Konverter angebracht ist. Die Drahtlosschnittstelle 17 des LED-Konverters 10 und die Drahtlosschnittstelle 27 des LED-Moduls 20 können induktiv gekoppelt sein. Die Drahtlosschnittstelle 17 des LED-Konverters 10 und die Drahtlosschnittstelle 27 des LED-Moduls 20 können jeweils eine Spule oder ein anderes Element zur induktiven Kopplung, z.B. eine Antenne umfassen, mit der Energie zum Betreiben der wenigstens einen Leuchtdiode 21 drahtlos von dem LED-Konverter 10 zu dem LED-Modul 20 übertragen werden kann.

Im Betrieb des Systems 1 kann der LED-Konverter 10 über die Drahtlosschnittstelle 17 Energie zum Betreiben der wenigstens einen Leuchtdiode 21 zu dem LED-Modul 20 übertragen, ohne dass eine Verbindungsleitung zwischen dem LED-Konverter 10 und dem LED-Modul 20 verwendet wird. Ein LED-Strom für die wenigstens eine Leuchtdiode 20 kann bereitgestellt werden, auch wenn der LED-Konverter 10 galvanisch von dem LED-Modul 20 getrennt ist. Das LED-Modul 20 kann als SELV-Gerät ausgestaltet sein, das über eine SELV-Barriere von dem LED-Konverter 10 getrennt ist.

Das LED-Modul 20 kann optional eine Versorgungsschaltung 22 umfassen, die mit der Drahtlosschnittstelle 27 gekoppelt ist. Die Versorgungsschaltung 22 kann einen Wandler, beispielsweise einen Abwärtswandler oder Sperrwandler, umfassen. Die Versorgungsschaltung 22 kann eingangsseitig mit der Drahtlosschnittstelle 27 gekoppelt sein, um im Betrieb des LED-Moduls 20 einen LED-Strom für die wenigstens eine Leuchtdiode bereitzustellen. Andere Ausgestaltungen des LED-Moduls 20 sind möglich. Beispielsweise muss das LED-Modul 20 keinen Wandler aufweisen.

Die Drahtlosschnittstelle 17 des LED-Konverters 10 und die Drahtlosschnittstelle 27 des LED-Moduls 20 können unterschiedliche Ausgestaltungen aufweisen. Die Drahtlosschnittstelle 17 des LED-Konverters 10 und die Drahtlosschnittstelle 27 des LED-Moduls 20 können jeweils eine Spule umfassen, wobei die Spulen induktiv gekoppelt sind, wenn das LED-Modul 20 auf den LED-Konverter 10 aufgesteckt ist.

Der LED-Konverter 10 und das LED-Modul 20 können für eine Drahtloskommunikation eingerichtet sein. Die Drahtloskommunikation kann über die Drahtlosschnittstelle 17, 27 zur Energieübertragung erfolgen. Alternativ kann eine separate Kommunikationsschnittstelle zur drahtlosen Übertragung von Information zwischen dem LED-Konverter 10 und dem LED-Modul 20 vorgesehen sein. Verschiedene Ausgestaltungen werden unter Bezugnahme auf Figur 2 bis Figur 5 näher beschrieben.

Figur 2 zeigt ein System 1 nach einem Ausführungsbeispiel, bei dem die Drahtlosschnittstelle des LED-Konverters 10 eine Spule 17 ist. Die Drahtlosschnittstelle des LED-Moduls 20 ist eine Spule 27, die induktiv mit der Spule 17 des LED-Konverters 10 gekoppelt ist.

Der LED-Konverter 10 kann einen Gleichrichter und eine Leistungsfaktorkorrekturschaltung 12 sowie eine getaktete Wandlerschaltung 13 umfassen. Die Spule 17 zur induktiven Übertragung von Energie zum Betreiben der wenigstens einen Leuchtdiode kann mit der Wandlerschaltung 13 gekoppelt sein oder kann ein Teil der Wandlerschaltung 13 sein. Beispielsweise kann die Spule 17 eine Induktivität eines LLC-Resonanzwandlers sein. Die Wandlerschaltung 13 kann primärseitig getaktet sein. Die Wandlerschaltung 13 kann ein steuerbares Schaltmittel 14 umfassen, das von einer Steuereinrichtung 15 gesteuert und getaktet geschaltet wird.

Der LED-Konverter 10 kann eingerichtet sein, um eine automatische Lasterkennung durchzuführen. Die automatische Lasterkennung kann beispielsweise durch drahtloses Auslesen eines Identifikationselements, beispielsweise eines Widerstands, des LED-Moduls 20 oder durch ein Überwachen des Spulenstroms und/oder der Spulenspannung der Spule 17 erfolgen. Die Steuereinrichtung 15 kann eingerichtet sein, um das steuerbare Schaltmittel 15 abhängig von der erkannten Last getaktet zu schalten. Die Steuereinrichtung 15 kann eingerichtet sein, um das steuerbare Schaltmittel 14 abhängig von der erkannten Last und optional abhängig von einem benutzerdefiniert oder durch eine zentrale Steuerung vorgegebenen Dimmlevel getaktet schalten, um einen LED-Strom zu steuern oder zu regeln, der der wenigstens einen Leuchtdiode 21 zugeführt wird.

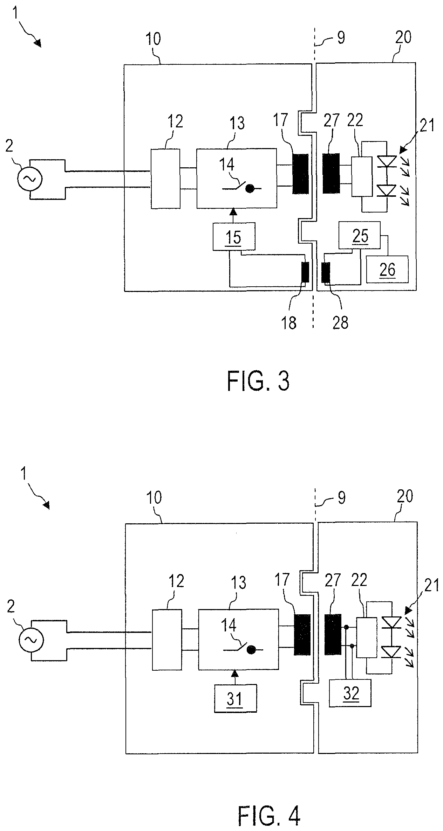

Die Spule 27 des LED-Moduls 20 und die induktiv damit gekoppelte Spule 17 des LED-Konverters 10 können einen Transformator bilden. Energie kann über eine galvanische Trennung, die eine Potentialbarriere 9 bildet, durch den Transformator übertragen werden. Eine Übertragung von Information kann ebenfalls drahtlos über die Potentialbarriere von dem LED-Konverter 10 zu dem LED-Modul 20 und/oder von dem LED-Modul 20 zu dem LED-Konverter 10 erfolgen, wie unter Bezugnahme auf Figur 3 bis Figur 5 näher beschrieben wird.

Figur 3 zeigt ein System 1 nach einem Ausführungsbeispiel, bei dem zusätzlich zu einer Drahtlosschnittstelle 17, 27 zur Energieübertragung eine separate drahtlose Kommunikationsschnittstelle vorgesehen ist. Die Kommunikationsschnittstelle kann eine weitere Spule 18 des LED-Konverters 10 und eine induktiv damit gekoppelte weitere Spule 28 des LED-Moduls 20 umfassen.

Über die induktive Kopplung zwischen der weiteren Spule 18 des LED-Konverters 10 und der weiteren Spule 28 des LED-Moduls 20 kann eine drahtlose Übertragung von Information von dem LED-Konverter 10 zu dem LED-Modul 20 und/oder von dem LED-Modul 20 zu dem LED-Konverter 10 erfolgen. Die Information kann eine Information über wenigstens eine Eigenschaft des LED-Moduls 20 umfassen, die von der Steuereinrichtung 15 des LED-Konverters 10 zur Regelung oder Steuerung des LED-Stroms verwendet wird und die über die weiteren Spulen 18, 28 von dem LED-Konverter induktiv ausgelesen werden kann. Die Information kann wenigstens einen Steuerbefehl umfassen, der von dem LED-Konverter 10 an das LED-Modul 20 übertragen wird. Die Information kann ein Sensorsignal umfassen, das von dem LED-Modul 20 drahtlos an den LED-Konverter 10 übertragen wird. Das LED-Modul 20 kann einen Sensor 26 aufweisen. Die übertragenen Informationen können von einem Ausgangssignal des Sensors 26 abhängen. Das LED-Modul 20 kann eine integrierte Halbleiterschaltung 25 aufweisen, die eingerichtet ist, um den Sensor 26 auszulesen und Sensordaten, wie beispielsweise Temperatur-, Helligkeits-, Farb- oder Betriebszustandsdaten, über die Kommunikationsschnittstelle mit den weiteren Spulen 18, 28 an den LED-Konverter 10 zu übertragen.

Andere Ausgestaltungen der Kommunikationsschnittstelle können bei weiteren Ausführungsbeispielen implementiert sein. Beispielsweise kann das LED-Modul 20 eine Antenne umfassen, um Information zu dem LED-Konverter 10 und/oder zu wenigstens einem weiteren LED-Modul und/oder zu einer zentralen Steuerung zu übertragen. Der LED-Konverter 10 kann eine Antenne umfassen, um Information zu dem LED-Modul 20 und/zu einer zentralen Steuerung zu übertragen. Die Kommunikation zwischen dem LED-Konverter 10 und dem LED-Modul 20 kann über dieselbe Drahtlosschnittstelle erfolgen, über die Energie zum Betreiben der wenigstens einen Leuchtdiode übertragen wird, wie unter Bezugnahme auf Figur 4 näher beschrieben wird.

Figur 4 zeigt ein System 1 nach einem Ausführungsbeispiel, bei dem eine unidirektionale oder bidirektionale Übertragung von Information über die Potentialbarriere 9 über dieselbe Drahtlosschnittstelle 17, 27 erfolgt, über die Energie zum Betreiben der wenigstens einen Leuchtdiode übertragen wird.

Der LED-Konverter 10 weist eine Steuereinrichtung 31 auf, die als integrierte Halbleiterschaltung ausgestaltet sein kann. Die Steuereinrichtung 31 kann eingerichtet sein, um das steuerbare Schaltmittel 14 eines Wandlers 13 des LED-Konverters 10 getaktet zu schalten. Um Information zu dem LED-Modul 20 zu übertragen, kann die Steuereinrichtung 31 eine Schaltfrequenz modulieren, mit der das steuerbare Schaltmittel 14 getaktet geschaltet wird.

Das LED-Modul 20 kann einen Demodulator 32 aufweisen. Der Demodulator 32 kann als eine integrierte Halbleiterschaltung ausgestaltet sein. Der Demodulator 32 kann eingerichtet sein, um eine Frequenz einer Spulenspannung oder eines Spulenstroms der Spule 27 zu überwachen, um eine Modulation der Schaltfrequenz des steuerbaren Schaltmittels 14 zu detektieren.

Alternativ oder zusätzlich kann das LED-Modul 20 einen Modulator umfassen, der eingerichtet ist, um über den durch die Spulen 17, 27 gebildeten Transformator Information von dem LED-Modul 20 zu dem LED-Konverter 10 zu übertragen. Die Information kann Sensordaten, wie beispielsweise Temperatur-, Helligkeits-, Farb- oder Betriebszustandsdaten, umfassen, die von dem LED-Modul 20 zu dem LED-Konverter 10 übertragen werden.

Unabhängig davon, ob Information über die Drahtlosschnittstelle zur Energieübertragung oder über eine davon verschiedene drahtlose Kommunikationsschnittstelle übertragen wird, kann die Information digitale Daten und/oder analoge Signale umfassen. Beispielsweise kann eine Folge von Datenbits von dem LED-Konverter 10 zu dem LED-Modul 20 und/oder von dem LED-Modul 20 zu dem LED-Konverter 10 übertragen werden, um Steuerbefehle, Sensordaten etc. zu übertragen.

Das LED-Modul nach Ausführungsbeispielen kann eingerichtet sein, um ohne jeden drahtgebundenen Anschluss zu arbeiten. Das LED-Modul kann eingerichtet sein, um nicht nur mit dem LED-Konverter, an dem das LED-Modul angebracht ist, sondern auch mit anderen Einheiten eines Beleuchtungssystems drahtlos zu kommunizieren. Beispielsweise können Informationen nach dem DALI ("Digital Addressable Lighting Interface")-Standard drahtlos zwischen dem LED-Modul und wenigstens einem weiteren LED-Modul oder einer zentralen Steuerung eines Beleuchtungssystems übertragen werden.

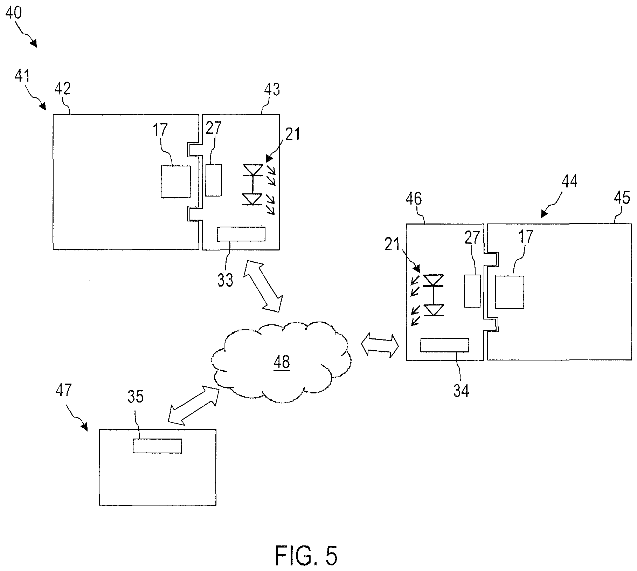

Figur 5 zeigt ein System 40 nach einem Ausführungsbeispiel. Das System 40 umfasst eine Einheit 41 aus einem LED-Konverter 42 und einem LED-Modul 43, das auf den LED-Konverter 42 aufgesteckt ist. Das LED-Modul 43 ist eingerichtet, um über eine Drahtlosschnittstelle 27 Energie von dem LED-Konverter 42 zum Betreiben der wenigstens einen Leuchtdiode 21 zu empfangen. Der LED-Konverter 42 weist eine Drahtlosschnittstelle 17 zum Übertragen von Energie zu dem LED-Modul 43 auf. Der LED-Konverter 42 und das LED-Modul 43 können wie unter Bezugnahme auf Figur 1 bis Figur 4 beschrieben ausgestaltet sein. Das LED-Modul 43 weist eine Kommunikationsschnittstelle 33 zur Drahtloskommunikation auf. Die Kommunikationsschnittstelle 33 kann eine Antenne umfassen. Mit der Kommunikationsschnittstelle 33 können Daten empfangen und/oder gesendet werden.

Das System 40 umfasst wenigstens eine weitere Einheit 44 aus einem weiteren LED-Konverter 45 und einem weiteren LED-Modul 46. Der weitere LED-Konverter 45 und das weitere LED-Modul 46 können ebenfalls wie unter Bezugnahme auf Figur 1 bis Figur 4 beschrieben ausgestaltet sein. Der weitere LED-Konverter 45 und das weitere LED-Modul 46 können jedoch auch eine herkömmliche verdrahtete Verbindung zum Übertragen von Energie von dem weiteren LED-Konverter 45 zu dem weiteren LED-Modul 46 aufweisen. Das weitere LED-Modul 46 weist eine Kommunikationsschnittstelle 34 zur Drahtloskommunikation auf. Die Kommunikationsschnittstelle 34 kann eine Antenne umfassen. Mit der Kommunikationsschnittstelle 34 können Daten empfangen und/oder gesendet werden.

Das System 40 kann eine zentrale Steuerung 47 umfassen. Die zentrale Steuerung 47 kann eine Kommunikationsschnittstelle 35 zur Drahtloskommunikation umfassen. Die zentrale Steuerung 47 kann eine Helligkeits- und/oder Farbsteuerung sein. Die zentrale Steuerung 47 kann eine Benutzerschnittstelle umfassen und kann eingerichtet sein, um Dimmbefehle und/oder Befehle zur Farbsteuerung an die LED-Module 43, 46 zu übertragen und/oder um Statusmeldungen von den LED-Modulen 43, 46 zu empfangen.

Die Kommunikation zwischen dem LED-Modul 43 und dem weiteren LED-Modul 46 und/oder der zentralen Steuerung 47 kann über ein Funknetzwerk 48 erfolgen. Dabei können Daten nach dem DALI-Standard übertragen werden. Die Daten können nach einem anderen Standard zur digitalen Datenübertragung übertragen werden.

Ein LED-Modul 43 nach einem Ausführungsbeispiel kann so ausgestaltet sein, dass es keine Anschlüsse für eine drahtgebundene Verbindung aufweist. Das LED-Modul 43 kann Energie zum Betreiben der wenigstens einen Leuchtdiode 21 über eine Drahtlosschnittstelle 27 von einem zugeordneten LED-Konverter 42 empfangen. Das LED-Modul 43 kann für eine Kommunikation mit dem zugeordneten LED-Konverter 42 und/oder wenigstens einem weiteren LED-Modul 46 und/oder der zentralen Steuerung 47 über ein Funknetz 48 eingerichtet sein. Die Energie zum Senden und/oder Empfangen von Daten kann das LED-Modul 43 von dem zugeordneten LED-Konverter 42 über die Drahtlosschnittstelle 27 empfangen. Daten können über die Kommunikationsschnittstelle 33 von einem weiteren LED-Modul 46 und/oder der zentralen Steuerung 47 empfangen und/oder zu einem weiteren LED-Modul 46 und/oder der zentralen Steuerung 47 gesendet werden.

Die von der Kommunikationsschnittstelle 33 empfangenen Daten können zur Steuerung des LED Moduls 43 verwendet werden. Die von der Kommunikationsschnittstelle 33 empfangen Daten können auch auf die primärseitige Drahtlosschnittstelle 17 übertragen werden, um das LED Modul 43 dann entsprechend zu steuern.

Während Vorrichtungen, Systeme und Verfahren nach Ausführungsbeispielen unter Bezugnahme auf die Figuren beschrieben wurden, können Abwandlungen bei weiteren Ausführungsbeispielen realisiert werden.

Während ein LED-Konverter und ein LED-Modul so ausgestaltet sein können, dass die galvanische Trennung zwischen dem LED-Konverter und dem LED-Modul eine SELV-Barriere bildet, können auch andere Ausgestaltungen verwendet werden. Beispielsweise kann der LED-Konverter einen Wandler mit galvanischer Trennung umfassen, um eine SELV-Barriere in dem LED-Konverter zu bilden.

Ein LED-Konverter und ein LED-Modul können so ausgestaltet sein, dass das LED-Modul auf den LED-Konverter aufsteckbar ist, wobei das LED-Modul reibschlüssig und/oder formschlüssig an dem LED-Konverter gehalten wird, ohne dass separate Befestigungselemente verwendet werden. Ein LED-Konverter und ein LED-Modul können so ausgestaltet sein, dass das LED-Modul alternativ oder zusätzlich mit separaten Befestigungselementen an dem LED-Konverter befestigbar ist.

Ein LED-Konverter und ein LED-Modul können so eingerichtet sein, dass nicht nur die Energie zum Betreiben der wenigstens einen Leuchtdiode, sondern auch Information drahtlos zwischen dem LED-Konverter und dem LED-Modul übertragen werden kann. Bei weiteren Ausführungsbeispielen muss keine Drahtloskommunikation zwischen dem LED-Konverter und dem LED-Modul vorgesehen sein. Für eine Informationsübertragung zwischen dem LED-Konverter und dem LED-Modul kann auch eine gedrahtete Verbindung verwendet werden. Die drahtgebundene Verbindung wird in diesem Fall nur zur Datenübertragung, aber nicht zur Energieversorgung der wenigstens einen Leuchtdiode verwendet.

Die Steuereinrichtung eines LED-Konverters oder eines LED-Moduls nach Ausführungsbeispielen können jeweils als integrierte Halbleiterschaltung ausgestaltet sein. Die Steuereinrichtung kann als anwendungsspezifische Spezialschaltung (ASIC, "Application Specific Integrated Circuit"), als Controller, als Mikrocontroller, als Prozessor, als Mikroprozessor oder als anderer Chip ausgestaltet sein.

Ein LED-Konverter und ein LED-Modul können so eingerichtet sein, dass mechanische Kopplungselemente wie Vorsprünge und/oder Ausnehmungen eine eindeutige Position festlegen, in der das LED-Modul an dem LED-Konverter befestigbar ist. Die mechanischen Kopplungselemente können auch so ausgestaltet sein, dass das LED-Modul in zwei oder mehr als zwei unterschiedlichen Positionen an dem LED-Konverter befestigbar ist.

LED-Module, LED-Konverter, Verfahren und Systeme nach Ausführungsbeispielen erleichtern die korrekte Installation von Leuchtmitteln mit wenigstens einer Leuchtdiode.

## Patentansprüche

1. LED-Modul (20; 43), umfassend
wenigstens eine Leuchtdiode (21) und
eine Drahtlosschnittstelle (27) zur drahtlosen Energieübertragung von einem LED-Konverter (10, 42) an das LED-Modul (20; 43), um die wenigstens eine Leuchtdiode (21) des LED-Moduls (20; 43) mit Energie zu versorgen, und
eine Kommunikationsschnittstelle (33),
**dadurch gekennzeichnet,**
**dass** die Kommunikationsschnittstelle (33) für eine Drahtloskommunikation mit wenigstens einem weiteren LED-Modul (46) eingerichtet ist, und
**dass** die Drahtlosschnittstelle (27) sowohl zur drahtlosen Energieübertragung als auch zur Drahtloskommunikation eingerichtet ist, um von der Kommunikationsschnittstelle (33) empfangene Daten über die Drahtlosschnittstelle (27) an den LED-Konverter (10, 42) zu übertragen, um das LED-Modul (20; 43) dann entsprechend zu steuern.

2. LED-Modul (20; 43) nach Anspruch 1,
wobei die Drahtlosschnittstelle (27) ein Element zur induktiven Kopplung des LED-Moduls (20; 43) mit dem LED-Konverter (10; 42) umfasst.

3. LED-Modul (20; 43) nach Anspruch 1 oder Anspruch 2,
wobei die Drahtlosschnittstelle (27) eine Antenne umfasst.

4. LED-Modul (20; 43) nach einem der vorhergehenden Ansprüche, umfassend
eine mit der Drahtlosschnittstelle (27) gekoppelte Versorgungsschaltung (22), die eingerichtet ist, um einen LED-Strom für die wenigstens eine Leuchtdiode (21) bereitzustellen.

5. LED-Modul (20; 43) nach einem der vorhergehenden Ansprüche, umfassend
eine von der Drahtlosschnittstelle (27) verschiedene Kommunikationsschnittstelle (28) zur Drahtloskommunikation.

6. LED-Modul (20; 43) nach einem der vorhergehenden Ansprüche, umfassend
wenigstens ein mechanisches Kopplungselement (29) zum mechanischen Anbringen des LED-Moduls (20; 43) an dem LED-Konverter (10; 42).

7. LED-Modul (20; 43) nach Anspruch 6,
wobei das LED-Modul (20; 43) auf den LED-Konverter (10; 42) aufsteckbar ist.

8. System, umfassend
ein LED-Modul (20; 43) nach einem der Ansprüche 1 bis 7, und
den LED-Konverter (10; 42),
wobei der LED-Konverter (10; 42) einen Eingang zum Empfangen einer Versorgungsspannung und eine Drahtlosschnittstelle (17) zur drahtlosen Energieübertragung zu dem LED-Modul (20; 43) umfasst.

9. System nach Anspruch 8,
wobei der LED-Konverter (10; 42) wenigstens ein mechanisches Kopplungselement (19) zum mechanischen Anbringen des LED-Moduls (20; 43) an dem LED-Konverter (10; 42) umfasst.

10. System nach einem der Ansprüche 8 oder 9,
wobei die Drahtlosschnittstelle (17) des LED-Konverters (10; 42) eine Primärinduktivität eines Transformators ist, und
wobei die Drahtlosschnittstelle (27) des LED-Moduls (20; 43) eine Sekundärinduktivität des Transformators ist.

11. System nach einem der Ansprüche 8 bis 10,
wobei der LED-Konverter (10; 42) und das LED-Modul (20; 43) galvanisch getrennt sind.

12. System nach einem der Ansprüche 8 bis 11,
wobei das LED-Modul (20; 43) auf den LED-Konverter (10; 42) aufsteckbar ist.

13. System nach Anspruch 12, wobei die Kommunikationsschnittstelle (33) vorzugsweise als Antenne ausgebildet ist und eingerichtet ist, um Daten von dem weiteren LED-Modul (46) und/oder einer zentralen Steuerung (47) zu empfangen und/oder Daten zu dem weiteren LED-Modul (46) und/oder zu der zentralen Steuerung (47) zu senden.

14. Verfahren zum Betreiben wenigstens einer Leuchtdiode (21) eines LED-Moduls (20; 43), wobei das Verfahren umfasst:
drahtloses Übertragen von Energie von einem LED-Konverter (10; 42) zu einem LED-Modul (20; 43) über eine Drahtlosschnittstelle (17, 27), um einen LED-Strom für die wenigstens eine Leuchtdiode (21) bereitzustellen;
drahtloses Empfangen von Daten von einem weiteren LED-Modul (46) über eine Kommunikationsschnittstelle (33) des LED-Moduls (20; 43); und
drahtloses Übertragen der von der Kommunikationsschnittstelle (33) empfangenen Daten über die Drahtlosschnittstelle (27) an den LED-Konverter (10, 42), um das LED-Modul (20; 43) dann entsprechend zu steuern.

15. Verfahren nach Anspruch 14, umfassend:
drahtloses Senden von Daten von dem LED-Modul (20; 43) an das weitere LED-Modul (46) über die Kommunikationsschnittstelle (33).

## Claims

1. An LED module (20; 43), comprising
at least one light-emitting diode (21) and
a wireless interface (27) for the wireless energy transmission from an LED converter (10, 42) to the LED module (20; 43), in order to supply the at least one light-emitting diode (21) of the LED module (20; 43) with energy, and
a communication interface (33),
**characterized in**
**that** the communication interface (33) is set up for a wireless communication with at least one further LED module (46), and
**that** the wireless interface (27) is set up both for wireless energy transmission as well as for wireless communication, in order to transmit data received from the communication interface (33) via the wireless interface (27) to the LED converter (10, 42), in order then to control the LED module (20; 43) accordingly.

2. An LED module (20; 43) according to Claim 1,
wherein the wireless interface (27) comprises an element for the inductive coupling of the LED module (20; 43) with the LED converter (10; 42).

3. An LED module (20; 43) according to Claim 1 or Claim 2,
wherein the wireless interface (27) comprises an antenna.

4. An LED module (20; 43) according to any one of the preceding claims, comprising a supply circuit (22) coupled with the wireless interface (27), which is set up, in order to provide an LED current for the at least one light-emitting diode (21).

5. An LED module (20; 43) according to any one of the preceding claims, comprising a communication interface (28) for the wireless communication, which is different from the wireless interface (27).

6. An LED module (20; 43) according to any one of the preceding claims, comprising at least one mechanical coupling element (29) for the mechanical attachment of the LED module (20; 43) to the LED converter (10; 42).

7. An LED module (20; 43) according to Claim 6,
wherein the LED module (20; 43) can be attached to the LED converter (10; 42).

8. A system, comprising
an LED module (20; 43) according to any one of Claims 1 to 7 and
the LED converter (10; 42),
wherein the LED converter (10; 42) comprises an input for the reception of a supply voltage and a wireless interface (17) for the wireless energy transmission to the LED module (20; 43).

9. A system according to Claim 8,
wherein the LED converter (10; 42) comprises at least one mechanical coupling element (19) for the mechanical attachment of the LED module (20; 43) to the LED converter (10; 42).

10. A system according to any one of Claims 8 or 9,
wherein the wireless interface (17) of the LED converter (10; 42) is a primary inductance of a transformer, and
wherein the wireless interface (27) of the LED module (20; 43) is a secondary inductance of the transformer.

11. A system according to any one of Claims 8 to 10,
wherein the LED converter (10; 42) and the LED module (20; 43) are galvanically separated.

12. A system according to any one of Claims 8 to 11,
wherein the LED module (20; 43) can be attached to the LED converter (10; 42).

13. A system according to Claim 12, wherein the communication interface (33) is preferably designed as an antenna and is set up, in order to receive data from the further LED module (46) and/or a central control (47) and/or to transmit data to the further LED module (46) and/or to the central control (47).

14. A method for operating at least one light-emitting diode (21) of an LED module (20; 43), wherein the method comprises:
wireless transmission of energy from an LED converter (10; 42) to an LED module (20; 43) via a wireless interface (17, 27), in order to provide an LED current for the at least one light-emitting diode (21);
wireless reception of data from a further LED module (46) via a communication interface (33) of the LED module (20; 43); and
wireless transmission of the data received from the communication interface (33) via the wireless interface (27) to the LED converter (10, 42), in order then to control the LED module (20; 43) accordingly.

15. A method according to Claim 14, comprising:
wireless transmission of data from the LED module (20; 43) to the further LED module (46) via the communication interface (33).

## Revendications

1. Module LED (20 ; 43) comprenant
au moins une diode électroluminescente (21) et
une interface sans fil (27) pour la transmission d'énergie sans fil d'un convertisseur de LED (10, 42) vers le module LED (20; 43) afin d'alimenter en énergie l'au moins une diode électroluminescente (21) du module LED (20 ; 43) et
une interface de communication (33),
**caractérisé en ce que**
l'interface de communication (33) est conçue pour une communication sans fil avec au moins un module LED supplémentaire (46) et
l'interface de communication (27) est conçue aussi bien pour la transmission d'énergie sans fi que pour une communication sans fil, afin de transmettre les données reçues en provenance de l'interface de communication (33) par l'intermédiaire de l'interface sans fil (27) au convertisseur LED (10, 42), afin de contrôler le module LED (20 ; 43) en conséquence.

2. Module LED (20 ; 43) selon la revendication 1,
l'interface sans fil (27) comprenant un élément de couplage inductif du module LED (20 ; 43) avec le convertisseur LED (10 ; 42).

3. Module LED (20 ; 43) selon la revendication 1 ou la revendication 2, l'interface sans fil (27) comprenant une antenne.

4. Module LED (20 ; 43) selon l'une des revendications précédentes, comprenant
un circuit d'alimentation (22) couplé avec l'interface sans fil (27), qui est conçu pour mettre à disposition un courant LED pour l'au moins une diode électroluminescente (21).

5. Module LED (20 ; 43) selon l'une des revendications précédentes, comprenant
une interface de communication (28), différente de l'interface sans fil (27), pour une communication sans fil.

6. Module LED (20 ; 43) selon l'une des revendications précédentes, comprenant
au moins un élément de couplage mécanique (29) pour la fixation mécanique du module LED (20 ; 43) au convertisseur LED (10 ; 42).

7. Module LED (20 ; 43) selon la revendication 6,
le module LED (20 ; 43) pouvant être enfiché sur le convertisseur LED (10 ; 42).

8. Système comprenant
un module LED (20 ; 43) selon l'une des revendications 1 à 7 et
le convertisseur LED (10 ; 42),
le convertisseur LED (10 ; 42) comprenant une entrée pour la réception d'une tension d'alimentation et une interface sans fil (17) pour la transmission d'énergie sans fil au module LED (20 ; 43).

9. Système selon la revendication 8,
le convertisseur LED (10 ; 42) comprenant au moins un élément de couplage mécanique (19) pour la fixation mécanique du module LED (20 ; 43) au convertisseur LED (10 ; 42).

10. Système selon l'une des revendications 8 ou 9,
l'interface sans fil (17) du convertisseur LED (10 ; 42) étant une inductance primaire d'un transformateur et
l'interface sans fil (27) du module LED (20 ; 43) étant une inductance secondaire du transformateur.

11. Système selon l'une des revendications 8 à 10,
le convertisseur LED (10; 42) et le module LED (20; 43) étant séparés galvaniquement.

12. Système selon l'une des revendications 8 à 11,
le module LED (20 ; 43) pouvant être enfiché sur le convertisseur LED (10 ; 42).

13. Système selon la revendication 12, l'interface de communication (33) étant de préférence conçue comme une antenne et conçue pour recevoir des données en provenance du module LED supplémentaire (46) et/ou d'une commande centrale (47) et/ou d'envoyer des données au module LED supplémentaire (46) et/ou à la commande centrale (47).

14. Procédé de commande d'au moins une diode électroluminescente (21) d'un module LED (20 ; 43), ce procédé comprenant :
la transmission sans fil d'énergie d'un convertisseur (10 ; 42) vers un module LED (20 ; 43) par l'intermédiaire d'une interface sans fil (17, 27) afin de mettre à disposition un courant LED pour l'au moins une diode électroluminescente (21) ;
la réception sans fil de données en provenance d'un module LED supplémentaire (46) par l'intermédiaire d'une interface de communication (33) du module LED (20 ; 43) ; et
la transmission sans fil des données reçues par l'interface de communication (33) par l'intermédiaire de l'interface sans fil (27) au convertisseur LED (10, 42) afin de contrôler le module LED (20 ; 43) en conséquence.

15. Procédé selon la revendication 14 comprenant :
l'envoi sans fil de données du module LED (20 ; 43) au module LED supplémentaire (46) par l'intermédiaire de l'interface de communication (33).
